# FASCICULE DE BREVET EUROPEEN

(11) **EP 3 768 645 B1**
(45) Date de publication et mention de la délivrance du brevet: **20.04.2022**
(21) Numéro de dépôt: 19711616.3
(22) Date de dépôt: 22.03.2019
(51) Int. Cl.: C03C 13/00, C03C 13/04, C03C 3/078, C03C 4/00, C03C 4/12, G02B 6/02

(54) **ELEMENT OPTIQUE ET PROCEDE DE FABRICATION ASSOCIE**
OPTISCHES ELEMENT UND ZUGEHÖRIGES HERSTELLUNGSVERFAHREN
OPTICAL ELEMENT AND ASSOCIATED MANUFACTURING METHOD

(30) Priorité: 22.03.2018 FR 1852502
(43) Date de publication de la demande: 27.01.2021
(73) Titulaire: Centre national de la recherche scientifique, 75016 Paris (FR); Universite de Limoges, 87000 Limoges (FR)
(72) Inventeur: POMAREDE, Damien, 87000 Limoges (FR); AUGUSTE, Jean-Louis, 87000 Limoges (FR); HUMBERT, Georges, 87570 Rilhac-Rancon (FR); ALLIX, Mathieu, 45160 Olivet (FR); GENEVOIS, Cécile, 45160 Olivet (FR); VERON, Emmanuel, 45071 Orléans Cedex 2 (FR); CHENU, Sébastien, 87590 Saint-Just-le-Martel (FR); DELAIZIR, Gaëlle, 31400 Toulouse (FR)
(74) Mandataire: Marks & Clerk France
(86) Numéro de dépôt international: PCT/EP2019/057323
(87) Numéro de publication internationale: WO 2019/180246

(56) Documents cités:
- US-B1- 6 698 246
- ZHIGANG GAO ET AL: "Selective doping of Ni2+ in highly transparent glass-ceramics containing nano-spinels ZnGa2O4 and Zn1+x Ga2-2x Ge x O4 for broadband near-infrared fiber amplifiers", SCIENTIFIC REPORTS, vol. 7, no. 1, 11 mai 2017 (2017-05-11), XP055554895, DOI: 10.1038/s41598-017-01676-6
- ZAIJIN FANG ET AL: "Ni^2+ doped glass ceramic fiber fabricated by melt-in-tube method and successive heat treatment", OPTICS EXPRESS, vol. 23, no. 22, 20 octobre 2015 (2015-10-20), page 28258, XP055554915, DOI: 10.1364/OE.23.028258
- V N SIGAEV ET AL: "Nickel-assisted growth and selective doping of spinel-like gallium oxide nanocrystals in germano-silicate glasses for infrared broadband light emission", NANOTECHNOLOGY., vol. 23, no. 1, 8 décembre 2011 (2011-12-08), page 015708, XP055554840, GB ISSN: 0957-4484, DOI: 10.1088/0957-4484/23/1/015708
- Valery M. Mashinsky ET AL: "Microfluorescence Analysis of Nanostructuring Inhomogeneity in Optical Fibers with Embedded Gallium Oxide Nanocrystals", Microscopy and Microanalysis, vol. 18, no. 02, 21 March 2012 (2012-03-21), pages 259-265, XP055554891, ISSN: 1431-9276, DOI: 10.1017/S1431927611012827
- A. Paleari ET AL: "Crystallization of nanoheterogeneities in Ga-containing germanosilicate glass: Dielectric and refractive response changes", ACTA MATERIALIA., vol. 70, 13 March 2014 (2014-03-13), pages 19-29, XP055554897, GB ISSN: 1359-6454, DOI: 10.1016/j.actamat.2014.02.022

## Description

La présente invention concerne un élément optique. La présente invention concerne également un procédé de fabrication d'un tel élément optique.

Des éléments optiques tels que des fibres optiques sont utilisés dans un grand nombre d'applications notamment reliées au domaine des télécommunications. En particulier, de tels éléments optiques sont utilisés pour transmettre un rayonnement optique, mais aussi dans certaines applications pour émettre, convertir ou amplifier un rayonnement optique. Dans ces applications, le matériau composant l'élément optique est généralement dopé avec des ions tels que des ions de terres rares. La longueur d'onde du rayonnement optique obtenu dépend alors du type de dopants utilisés, et est susceptible de varier sur une grande gamme de longueurs d'ondes.

Ces éléments optiques sont généralement réalisés en un matériau transparent à la longueur d'onde utilisée, tel que la silice.

Cependant, la gamme de longueurs d'ondes sur lesquelles la silice est transparente est relativement limitée, notamment dans l'infra-rouge. En outre, les ions de terres rares sont peu solubles dans la silice, ce qui limite l'efficacité de l'émission.

Des éléments optiques réalisés en matériaux vitrocéramiques, plus simplement dénommés « vitrocéramiques » dans ce qui suit, ont été proposés comme alternative aux éléments optiques en silice. Les vitrocéramiques sont des matériaux comprenant une matrice amorphe et un ensemble de grains cristallins contenus dans la matrice. Ces éléments optiques vitrocéramiques permettent notamment d'envisager d'utiliser des dopants qui ne sont pas luminescents dans la silice.

Toutefois, les vitrocéramiques connues sont difficiles à mettre en œuvre, notamment sous la forme de fibres optiques. Le contrôle de la nanostructure de ces vitrocéramiques est en particulier difficile à contrôler. En conséquence, des gammes de longueurs d'onde accessibles par des éléments optiques en silice sont difficilement accessibles par des éléments optiques réalisés en ces vitrocéramiques.

L'article de S. Chenu et al., « Tuneable Nanostructuring of Highly Transparent Zinc Gallogermanate Glasses and Glass-Ceramics » publié dans Advanced Optical Materials en 2014, divulgue les premières réalisations de matériaux vitrocéramiques, c'est-à-dire un matériau amorphe (matrice), dans lesquels sont réparties des particules cristallines. Ces matériaux vitrocéramiques sont composés de particules cristallines à l'échelle nanométrique de ZnGa₂O₄ et/ou de Zn₁₊ₓ Ga₂₋₂ₓ Geₓ O₄ dans une matrice de GeO₂. La possibilité de réaliser ces matériaux dans une matrice de SiO₂ est également évoquée. Ces vitrocéramiques sont obtenues par la synthèse de verres démixés (séparation de phase) à l'échelle nanométrique qui sont ensuite cristallisés (par un traitement thermique), pour donner des vitrocéramiques qui présentent la particularité d'être transparentes aux rayons lumineux sur la plage de longueurs d'ondes 0,4 µm - 6 µm.

L'article de S. Chenu et al. « Long-lasting luminescent ZnGa2O4:Cr3+ transparent glass-ceramics », publié dans Journal of Material Chemistry en 2014 divulgue des vitrocéramiques composées de particules cristallines ZnGa₂O₄ dans une matrice de SiO₂. Cette étude démontre la réalisation de vitrocéramiques transparentes (sur la plage 0,4 - 4,5 µm) composées d'une matrice composée de 55% en fraction molaire de SiO2 et de particules cristallines de ZnGa₂O₄. De plus, cette étude montre que le matériau ZnGa₂O₄ permet une luminescence très longue des ions métalliques de chrome (Cr³⁺). Les ions métalliques sont des dopants insérés dans le matériau. Ces résultats confirment les remarquables propriétés du matériau ZnGa₂O₄ pour exacerber la luminescence de dopants (comme ici des ions métalliques). En effet, ces travaux corroborent les résultats expérimentaux publiés par M. Allix et al. en 2013 dans l'article « Considerable Improvement of Long-Persistent Luminescence in Germanium and Tin Substituted ZnGa2O4 » (Chemistry of Materials) qui portent sur des céramiques polycristallines (pastilles de poudre non transparentes) composées de ZnGa₂O₄ substitués Ge et Sn. Le matériau ZnGa₂O₄ présente l'intérêt d'avoir une structuration cristalline dans laquelle les ions Gallium sont uniquement dans des sites octaédriques, ce qui favorise la luminescence des ions métalliques (dopants) insérés dans le matériau.

Néanmoins, la teneur en GeO₂ ou en SiO₂ des vitrocéramiques de l'art antérieur n'excède pas 60% en fraction molaire, la plage spectrale accessible par des éléments optiques réalisés avec ces matériaux reste donc limitée.

L'article de Z. Gao et al, « Selective doping of Ni2+ in highly transparent glass-ceramics containing nano-spiels ZnGa2O4 and Zn1+xGa2-2xGexO4 for broadband near-infrared fiber amplifiers », publié dans Scientific Reports en 2017 divulgue des matériaux vitrocéramiques similaires dont la teneur en SiO₂ de la matrice est de 51% en fraction molaire.

L'article de Z. Fang et al, « Ni2+ doped glass ceramic fiber fabricated by melt-in-tube method and successive heat treatment », publié dans Optics Express en 2015 divulgue des fibres optiques dont le cœur est composé d'un matériau vitrocéramique. Celui-ci est composé d'une matrice de silice (SiO₂) dont la teneur est de 64% en fraction molaire et des particules de LiGa₅O₈. La teneur plus élevée en SiO₂ de la matrice permet d'accroitre la transparence de la vitrocéramique et donc ici du cœur de la fibre optique (c'est-à-dire de réduire les pertes de propagations). Cependant, dans le matériau LiGa₅O₈, qui constitue les particules, les ions Gallium sont disposés à la fois dans des sites octaédriques et dans des sites tétraédriques. Ces réalisations sont similaires à celles présentées dans l'article de V.N. Sigaev et al, « Nickel-assisted growth and selective doping of spinel-like gallium oxide nanocrystals in germane-silicate glasses for infrared broadband light emission », publié dans Nanotechnology en 2011, qui divulgue des matériaux vitrocéramiques comprenant 35% en fraction molaire de SiO₂ dans la matrice amorphe et des particules cristallines de LiGa₅O₈ et γ-Ga₂O₄. Ces matériaux ne présentent pas un environnement cristallin des ions Gallium composé uniquement d'un site octaédrique. Ces matériaux présentent donc une structure cristalline moins favorable à la luminescence de dopants, en particulier d'ions métalliques.

Les procédés de fabrication actuels ne permettent pas de fabriquer de vitrocéramiques comprenant plus de 65% en fraction molaire de SiO₂, c'est pourquoi, on ne trouve pas dans l'art antérieur d'éléments optiques (comme des fibres optiques) permettant de transmettre sur des longueurs d'onde importantes un rayonnement lumineux et/ou de générer un rayonnement lumineux par luminescences d'ions métalliques suffisamment intense pour être utilisé.

Il existe donc un besoin pour un élément optique qui soit propre à fonctionner pour une gamme de longueurs d'ondes non couverte par les éléments optiques de l'état de la technique, par exemple la luminescence des ions nickels (Ni²⁺) permet de générer une rayonnement optique autour de 1300 nm avec une largeur de bande à mi-hauteur d'environ 300 nm lorsque ces ions (dans un environnement cristallin) sont excités par un rayonnement optique (comme par exemple celui issue d'une diode laser émettant à 980 nm)

A cet effet, il est proposé un élément optique réalisé en un matériau, le matériau étant une matrice et un ensemble de particules incluses dans la matrice, le matériau présentant une fraction molaire de SiO₂ supérieure ou égale à 75 pourcents, de préférence comprise entre 85 pourcents et 95 pourcents, chaque particule présentant une dimension inférieure ou égale à 80 nanomètres, de préférence inférieure ou égale à 10 nanomètres.

L'élément optique est tel que défini dans la revendication indépendante 1. Selon des modes de réalisation particuliers, l'élément optique présente une ou plusieurs des caractéristiques suivantes, prises isolément ou selon toutes les combinaisons techniquement possibles :
- l'une au moins des propriétés suivantes est vérifiée :
   - le matériau comprend au moins 90%, en masse, par rapport à la masse totale du matériau, une composition conforme à la formule suivante :

      (SiO₂)ₓ(Ga₂O₃)ₐ(Oxy1)_{b}(Oxy2)_{c}

      où :
      ▪ Oxy1 représente un oxyde choisi parmi ZnO, MgO, NbO_{2.5}, WO₃, NiO, SnO, TiO₂, BiO_{1.5}, AgO, CaO, MnO, ou un mélange de ceux-ci, de préférence choisi parmi ZnO, MgO, AgO, BiO_{1.5} ou un mélange de ceux-ci,
      ▪ Oxy2 représente un oxyde choisi parmi Na₂O, K₂O ou un mélange de ceux-ci, de préférence Oxy2 représente Na₂O,
      ▪ x est supérieur à 75, et inférieur à 99, notamment inférieur à 95,
      ▪ a est compris entre 5 et 25,
      ▪ b est compris entre 1 et 25,
      ▪ c est compris entre 0 et 5, et
      ▪ x, a, b, et c sont tels que x + a + b + c = 100.
   - chaque particule est réalisée en ELGa₂O₄, où EL désigne un élément choisi parmi Zn, Mg, Nb, W, Ni, Sn, Ti, Bi, Ag, Ca, Mn, ou un mélange de ceux-ci,
   - chaque particule comprend, en outre, un élément dopant,
   - l'élément dopant est un métal de transition, notamment le nickel, ou une terre rare et
   - la matrice est réalisée en SiO₂.
- le matériau est obtenu à partir d'un précurseur comprenant une poudre comprenant du SiO₂, du Na₂O, du ZnO et du Ga₂O₃, la fraction molaire de SiO₂ dans le précurseur étant comprise entre 50 pourcents et 80 pourcents, notamment comprise entre 65 pourcents et 75 pourcents.
- le matériau est obtenu à partir d'un précurseur comprenant une poudre conforme à la formule suivante :

   (SiO₂)ₓ(Ga₂O₃)ₐ(Oxy1)_{b}(Oxy2)_{c}

   où :
   o Oxy1 représente un oxyde choisi parmi ZnO, MgO, NbO_{2.5},WO₃, NiO, SnO, TiO₂, BiO_{1.5}, AgO, CaO, MnO, ou un mélange de ceux-ci, de préférence choisi parmi ZnO, MgO, AgO, BiO_{1.5} ou un mélange de ceux-ci,
   o Oxy2 représente un oxyde choisi parmi Na₂O, K₂O ou un mélange de ceux-ci, de préférence Oxy2 représente Na₂O,
   o x est strictement supérieur à 75 et inférieur à 80, o a est compris entre 5 et 25,
   o b est compris entre 1 et 25,
   o c est compris entre 0 et 5, et
   o x, a, b, et c sont tels que x + a + b + c = 100.
- le précurseur comprend, en plus de la poudre, un élément dopant, au moins une des caractéristiques suivantes étant, de préférence, vérifiée :
   o une fraction molaire de l'élément dopant dans le précurseur est comprise entre 0,001 pourcent et 3 pourcents, et
   o l'élément dopant est un métal de transition, notamment le nickel, ou une terre rare.
- le matériau est une vitrocéramique.
- l'une au moins des propriétés suivantes est vérifiée :
   o l'élément optique est un cœur pour une fibre optique, et
   o l'élément optique est configuré pour émettre un rayonnement optique, notamment un rayonnement optique large bande.
- l'élément optique est une fibre optique comprenant un cœur réalisé en le matériau et une gaine en SiO₂ entourant le cœur.

Il est également proposé un procédé de fabrication d'un élément optique comprenant des étapes de :
- fourniture d'un précurseur, le précurseur comprenant une poudre comprenant du SiO₂, du Na₂O, du ZnO et du Ga₂O₃, la fraction molaire de SiO₂ étant comprise entre 50 pourcents et 80 pourcents, notamment comprise entre 65 pourcents et 75 pourcents,
- insertion de la poudre dans un tube de silice s'étendant selon une direction principale pour former une préforme,
- chauffage et étirage de la préforme à une température supérieure ou égale à 1700 degrés Celsius pour former l'élément optique, et
- recuit de l'élément optique.

Selon des modes de mise en œuvre particuliers, le procédé présente une ou plusieurs des caractéristiques suivantes, prises isolément ou selon toutes les combinaisons techniquement possibles :
- l'étape de recuit comprend le recuit de l'élément optique à une température comprise entre 700 degrés Celsius et 1200 degrés Celsius pendant une durée temporelle comprise entre 1 seconde et 10 heures.
- l'élément optique est une fibre optique, l'étape de chauffage comprenant l'étirage de la préforme selon la direction principale pour former une fibre optique comprenant un cœur et une gaine en SiO₂ entourant le cœur.

Des caractéristiques et avantages de l'invention apparaîtront clairement à la lecture de la description qui va suivre, donnée uniquement à titre d'exemple non limitatif et faite en référence aux dessins annexés, sur lesquels :
- la figure 1 est une représentation schématique d'un exemple d'élément optique,
- la figure 2 est un graphe correspondant à un exemple de spectre d'émission optique de l'élément optique de la figure 1,
- la figure 3 est un ordinogramme des étapes d'un exemple de procédé de fabrication de l'élément optique de la figure 1,
- la figure 4 est un graphe correspondant à quatre exemples de spectres d'émission optique de quatre exemples d'éléments optiques, et
- la figure 5 est un graphe correspondant à cinq exemples de spectres d'émission optique de cinq exemples d'éléments optiques.

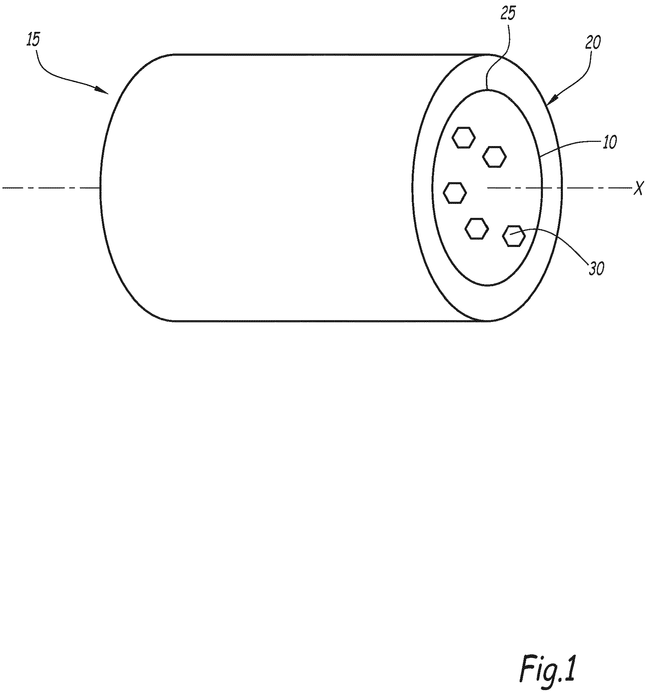

Un élément optique 10 est représenté sur la figure 1.

Il est entendu par « élément optique » un élément propre à permettre la propagation d'un rayonnement optique à l'intérieur de l'élément 10.

L'élément optique 10 est, par exemple, un cœur d'une fibre optique 15.

Une fibre optique est une fibre présentant deux extrémités et propre à transmettre un rayonnement optique, notamment un rayonnement visible ou infrarouge, entre les deux extrémités.

Une fibre optique comporte fréquemment un cœur s'étendant entre les deux extrémités et réalisé en un matériau transparent au rayonnement à transmettre.

Par « transparent », il est entendu au sens de la présente invention que l'on peut voir à travers le matériau. Cette notion qualitative de transparence est précisée quantitativement le cas échéant par une mesure de transmission lumineuse spéculaire. Le protocole de mesure de la transmission spéculaire consiste à mesurer l'intensité lumineuse selon l'axe du rayon lumineux incident. Un matériau peut être considéré comme transparent (pour les applications en optique notamment) pour une longueur d'onde donnée lorsque sa transmission lumineuse spéculaire est supérieure ou égale à 30% sur quelques millimètres de propagation.

Le cœur est fréquemment entouré par une gaine protectrice, par exemple sur toute la longueur de la fibre optique. En particulier, le cœur est entouré par la gaine dans un plan perpendiculaire à la direction dans laquelle la fibre s'étend.

La fibre optique 15 comporte, par exemple, une gaine 20 entourant l'élément optique 10.

La gaine 20 est, en particulier, prévue pour que le rayonnement injecté dans le cœur à une extrémité de la fibre optique ne puisse s'échapper du cœur qu'aux deux extrémités. Ainsi, un rayonnement injecté dans le cœur à une extrémité de la fibre optique est conduit par le cœur jusqu'à l'autre extrémité par un choix judicieux des profils d'indices optiques du cœur et de la gaine 20.

Dans l'exemple représenté, l'élément optique 10 présente une forme de cylindre à base circulaire et la gaine 20 présente en section une forme annulaire.

L'élément optique 10 présente deux extrémités. L'élément optique 10 s'étend entre les deux extrémités. L'élément optique 10 est, en particulier, configuré pour guider un rayonnement optique entre les deux extrémités.

La gaine 20 est, par exemple, réalisée en silice SiO₂.

L'élément optique 10 présente un diamètre, par exemple compris entre 1 micron (µm) et 100 µm.

L'élément optique 10 (cœur de la fibre) est réalisé en un premier matériau M1.

Le premier matériau M1 comprend, par exemple, au moins 90%, tel que de 90% à 100%, de préférence de 95 % à 100%, en masse, par rapport à la masse totale du matériau, d'une composition de formule suivante :

(SiO₂)ₓ(Ga₂O₃)ₐ(Oxy1)_{b}(Oxy2)_{c} (formule 1)

Où :
- Oxy1 représente un oxyde choisi parmi ZnO, MgO, NbO_{2.5},WO₃, NiO, SnO, TiO₂, BiO_{1.5}, AgO, CaO, MnO, ou un mélange de ceux-ci, de préférence choisi parmi ZnO, MgO, AgO, BiO_{1.5} ou un mélange de ceux-ci, et
- Oxy2 représente un oxyde choisi parmi Na₂O, K₂O ou un mélange de ceux-ci, de préférence Oxy2 représente Na₂O, et
- x est strictement supérieur à 75, et inférieur à 99, notamment inférieur à 95,
- a est compris entre 5 et 25,
- b est compris entre 1 et 25, et
- c est compris entre 0 et 5, et
- x, a, b, et c sont exprimés en pourcentage molaire et tels que x + a + b + c=100.

Le pourcentage molaire est égal à la fraction molaire multipliée par 100, ce qui permet de l'exprimer en %.

La fraction molaire d'un composant dans un mélange est égale au rapport de la quantité de matière de ce composant dans le mélange (exprimée en moles), sur le nombre total de quantités de matière des autres composants du mélange (également exprimées en moles).

Le complément à 100 % en masse du matériau M1 par rapport à la composition de formule 1, c'est-à-dire au plus 10 %, tel que 0 à 10 %, de préférence 0 à 5 % en masse est constitué d'oxydes formateurs de réseau qui abaissent la température de fusion des silicates et facilitent la vitrification du matériau M1 après fusion, lors du fibrage. Il s'agit principalement de GeO₂ et B₂O₃, deux oxydes formateurs de réseau, dont les teneurs respectives et leur total sont donc inférieurs à 10% massique, de préférence inférieurs à 5 % massique.

Le premier matériau M1 comprend une matrice 25 et un ensemble de particules 30. Par exemple, le premier matériau M1 consiste en une matrice 25 et un ensemble de particules 30.

Il est entendu par « matrice » un liant assurant la cohésion entre les différentes particules 30. En particulier, une masse de matière entourant chaque particule 30 est un exemple de matrice. Par exemple, chaque particule 30 est incluse dans la matrice 25 et est solidaire de la matrice 25.

La matrice 25 est réalisée en un deuxième matériau M2. Le deuxième matériau M2 est différent du premier matériau M1.

Le deuxième matériau M2 comprend, par exemple, du SiO₂.

Selon un mode de réalisation, le premier matériau M1 est une vitrocéramique.

Par « vitrocéramique », il est entendu au sens de la présente invention un matériau inorganique constitué d'une matrice vitreuse (phase amorphe) et de cristaux, de préférence de taille nanométrique, avec un taux de cristallisation contrôlable compris entre 2 % et 70 %, c'est-à-dire que entre 2 % et 70 % en volume du matériau est cristallin.

De préférence, le taux de cristallisation de la vitrocéramique est compris entre 10 % et 50 %. Les cristaux sont donc englobés dans une matrice de verre.

Par « verre », il est entendu au sens de la présente invention un solide inorganique amorphe, présentant le phénomène de transition vitreuse. Un verre est obtenu par refroidissement à partir d'une phase liquide.

Par « taille nanométrique », on entend au sens de la présente invention une taille comprise entre 1 nm et 500 nm, de préférence entre 5 et 150 nm.

En particulier, la matrice 25 est amorphe, et chaque particule 30 est réalisée en un matériau cristallin. Chaque particule 30 est donc un cristal de taille nanométrique.

Un matériau amorphe est un matériau dans lequel il n'existe pas d'ordre à une grande échelle des atomes. Il est considéré que l'échelle est grande dès que le matériau comporte au moins plus de 50 atomes.

Un matériau cristallin est un solide dont les constituants sont assemblés de manière régulière, par opposition à un matériau amorphe.

Un monocristal est un exemple de matériau cristallin. Un monocristal ou matériau monocristallin est un matériau solide constitué d'un seul et unique cristal.

Un polycristal est un autre exemple de matériau cristallin. Un polycristal est un solide constitué d'un assemblage de monocristaux.

Le fait que les particules soient sous forme cristalline permet de créer un environnement favorable à la luminescence de matériaux dopants tel que les ions métalliques, qui peuvent être présents dans les particules (cela est détaillé dans les paragraphes suivants).

La taille des particules influe sur les pertes de propagation optique par diffusion et/ou diffraction. Plus les particules sont grandes, plus les pertes optiques sont importantes, ce qui résulte en une faible puissance lumineuse à la sortie de l'élément optique (donc en sortie de la fibre optique si on considère que l'élément optique est un cœur de fibre optique). Ainsi, on préfère avoir des particules de faible taille, en particulier au moins inférieure à 80 nm afin de limiter ces pertes.

Il est néanmoins important que les particules soient toujours présentes et de taille suffisante dans le premier matériau M1, car sinon, les éventuels dopants présents dans les particules ont une luminescence qui décroît.

Le premier matériau M1 comprend plus de 75 pourcents (%) de SiO₂, en fraction molaire, ce qui permet de réduire la taille des particules et donc de réduire les pertes optiques. La silice est un matériau transparent dans la plage spectrale souhaitée (d'environ 300 nm à environ 2500 m), donc plus il y aura de silice et moins il y aura de particules, meilleure sera la transmission car les pertes seront réduites.

La fraction molaire de SiO₂ dans le premier matériau M1 est, par exemple, comprise entre 75 % et 99 %, notamment comprise entre 75 % et 95 %. En particulier, la fraction molaire de SiO₂ dans le premier matériau M1 est comprise entre 85 % et 99 %, notamment comprise entre 85% et 95%.

Chaque particule 30 est incluse dans la matrice 25 du premier matériau M1.

Chaque particule 30 présente une dimension inférieure ou égale à 80 nanomètres (nm). Par définition, une dimension de la particule 30 est la dimension de la particule 30 mesurée entre deux points extrêmes de la particule 30 le long d'une direction passant par le centre de gravité de la particule 30.

En particulier, chaque particule 30 présente une dimension maximale inférieure ou égale à 80 nanomètres. La dimension maximale est la plus grande de chaque dimension de la particule 30 selon une direction passant par le centre de gravité de la particule 30.

Selon un mode de réalisation, chaque particule 30 présente une dimension inférieure ou égale à 30 nm, et de préférence inférieure ou égale à 10 nm. En particulier, la dimension maximale de chaque particule 30 est inférieure ou égale à 30 nm, et de préférence inférieur ou égale à 10 nm.

Chaque particule 30 est réalisée en un troisième matériau M3.

Le troisième matériau M3 est distinct du premier matériau M1 et du deuxième matériau M2.

Le troisième matériau M3 est, par exemple, un spinelle. Les spinelles considérés ici sont un groupe de minéraux de formule générale (X²⁺)(Y³⁺)₂(O²⁻)₄, où X²⁺ est un cation divalent et Y³⁺ un cation trivalent.

Selon un mode de réalisation, le troisième matériau M3 est ELGa₂O₄, où EL désigne un élément choisi parmi Zn, Mg, Nb, W, Ni, Sn, Ti, Bi, Ag, Ca, Mn, ou un mélange de ceux-ci,

Selon un mode de réalisation, le troisième matériau M3 est ZnGa₂O₄.

Selon un autre mode de réalisation, le troisième matériau M3 est conforme à la formule Mg_{d}Zn_{1-d}Ga₂O₄, dans laquelle d représente la fraction molaire de MgO en substitution par rapport à ZnO dans l'oxyde Oxy1, d étant strictement supérieure à zéro.

Selon une variante, le troisième matériau M3 contient du calcium Ca. Par exemple, le troisième matériau M3 est conforme à la formule Mg_{d}CaₑZn_{1-d-e} Ga₂O₄, où d et e sont les fractions molaires respectives de MgO et de CaO dans l'oxyde Oxy1, au moins une fraction molaire parmi d et e étant strictement supérieure à zéro. En d'autres termes, l'oxyde Oxy1 comprend un mélange de CaO, de MgO et de ZnO.

Chaque particule 30 est, par exemple, dopée. En d'autres termes, chaque particule 30 comprend un élément dopant.

Un élément dopant est un élément présent en faible quantité dans le troisième matériau M3 afin d'apporter ou de modifier certaines propriétés (par exemple des propriétés optiques) du troisième matériau M3. En effet, l'élément dopant permet de générer de la lumière par luminescence s'il est préférentiellement dans un environnement cristallin. C'est pourquoi les particules sont cristallines.

L'élément dopant est, par exemple, un métal de transition.

Un métal de transition, ou élément de transition, est un élément chimique dont les atomes ont une sous-couche électronique d incomplète, ou qui peuvent former des cations dont la sous-couche électronique d est incomplète.

Le nickel est un exemple de métal de transition.

Le chrome est un autre exemple de métal de transition.

Il est à noter que d'autres métaux de transition sont susceptibles d'être utilisés, tels que le cobalt, le cuivre, le manganèse, le titane ou le vanadium.

Il est à noter que d'autres éléments dopants que les métaux de transition sont envisageables. Par exemple, l'élément dopant est un ion de terre rare.

Le dopage des particules permet de générer un rayonnement lumineux dans une plage spectrale définie, qui dépend de l'élément dopant utilisé, lorsque le dopant est excité à une longueur d'onde non comprise dans la plage spectrale d'émission du dopant. Par exemple, avec du nickel comme dopant compris dans des particules cristallines, on peut obtenir un rayonnement autour de 1300 nm en injectant au cœur de la fibre un laser à 980 nm.

La concentration d'élément dopant dans le premier matériau M1 est, par exemple, inférieure ou égale à 3 %, en fraction molaire. Par exemple, la concentration d'élément dopant dans le premier matériau M1 est inférieure ou égale à 1%. Selon un mode de réalisation, la concentration d'élément dopant dans le premier matériau M1 est inférieure ou égale à 0,5%, par exemple égale à 0,1%.

Des modes de réalisation dans lesquels la concentration d'élément dopant dans le premier matériau M1 est inférieure ou égale à 0,05 %, notamment inférieure ou égale à 0,001 % sont également envisageables, en particulier pour les métaux de transition utilisés en très faible concentration comme dopants.

Il est à noter que, dans cette description, la fraction molaire d'un composant est calculée en ne tenant pas compte d'un éventuel élément dopant présent dans le matériau. Par exemple, lorsque le deuxième matériau M2 est SiO₂ et que le troisième matériau M3 est ZnGa₂O₄, la fraction molaire de SiO₂ est égale au rapport, au numérateur, d'une quantité de matière de SiO₂ sur, au dénominateur, le nombre total de quantités de matière de SiO₂ et de ZnGa₂O₄.

Le fonctionnement de l'élément optique 10 va maintenant être décrit.

Dans une première étape, un premier rayonnement optique est injecté dans l'élément optique 10. Par exemple, le premier rayonnement optique est injecté à une extrémité de l'élément optique 10.

Lors d'une deuxième étape, le premier rayonnement optique est guidé par l'élément optique 10 et la gaine 20 de l'extrémité où le rayonnement optique a été injecté jusqu'à l'autre extrémité.

Les propriétés optiques de l'élément optique 10 sont susceptibles d'être contrôlées sur une large gamme de longueurs d'ondes si la composition du premier matériau est modifiée. En particulier, les pertes optiques par diffusion varient en fonction du taux de SiO₂ dans le premier matériau M1, en particulier en fonction de la taille des particules comprises dans le premier matériau M1, de même que les bandes d'absorption optique dans le premier matériau M1.

Des éléments optiques 10 dont le troisième matériau M3 est dopé sont susceptibles d'émettre un rayonnement optique à une longueur d'onde bien maîtrisée et dépendant du type de dopant.

Lorsque les particules 30 présentent de faibles dimensions par rapport à la longueur d'onde du rayonnement optique, par exemple inférieures ou égales à 10 nm, la diffusion des rayonnements optiques dans l'élément optique 10 est réduite. En particulier, pour des particules 30 de dimensions inférieures ou égales à 10 nm, les pertes optiques par diffusion sont limitées pour les rayonnements présentant une longueur d'onde supérieure ou égale à 400 nm. La puissance disponible en sortie de l'élément optique 10 est alors supérieure à la puissance disponible en sortie des éléments optiques de l'état de la technique.

Des éléments optiques 10 dont le premier matériau M1 présente une teneur élevée en SiO₂, notamment comprise entre 85 % et 99 %, présentent, pour un rayonnement optique propagé dans l'élément optique 10, des pertes réduites et sont particulièrement faciles à intégrer à un système optique, par exemple en soudant l'élément optique 10 à une fibre optique en silice.

En outre, l'élément optique 10 est facile à fabriquer.

L'élément optique 10 a été décrit ci-dessus dans le cas où l'élément optique 10 est un cœur d'une fibre optique.

Il est à noter que d'autres applications qu'un cœur de fibre optique 15 sont possibles pour l'élément optique 10.

Par exemple, l'élément optique 10 est susceptible d'être utilisé dans un émetteur de rayonnement optique, notamment de rayonnement laser. Dans ce cas, l'élément optique 10 est, en particulier, configuré pour émettre un rayonnement optique en présence d'une excitation.

Le terme « laser » est un acronyme de l'expression anglaise « Light Amplification by Stimulated Emission of Radiation », qui signifie « amplification lumineuse par émission stimulée d'un rayonnement ».

En particulier, lorsque l'élément optique 10, en particulier les particules présentes dans le matériau M1 formant l'élément optique, comporte un élément dopant, l'élément dopant est propre à émettre le premier rayonnement optique en présence d'une excitation.

Un émetteur laser, un amplificateur optique ou un scintillateur sont des exemples d'émetteurs de rayonnement optique.

Un émetteur laser est un dispositif configuré pour émettre un rayonnement laser en utilisant l'effet laser.

Dans le cas où l'élément optique 10 est intégré dans un émetteur laser, l'élément optique 10 et les différents éléments de l'émetteur laser sont, en outre, configurés pour que le deuxième rayonnement optique se propageant dans l'élément optique 10 soit au moins partiellement réfléchi à chaque extrémité de l'élément optique 10. En particulier, l'élément optique 10 forme ainsi une cavité résonante pour le deuxième rayonnement.

Selon un mode de réalisation particulier, l'émetteur de rayonnement optique est une source optique d'un système d'imagerie par tomographie optique cohérente. La tomographie en cohérence optique, ou tomographie optique cohérente (TCO, également connue par l'acronyme « OCT », pour « Optical Coherent Tomography ») est une technique d'imagerie bien établie qui utilise une onde lumineuse pour capturer des images tridimensionnelles d'un matériau qui diffuse la lumière (par exemple un tissu biologique), avec une résolution de l'ordre du micromètre.

Les éléments optiques 10 réalisés en un premier matériau M1 présentant, dans ses particules réalisées dans le troisième matériau M3, un dopage au nickel présentent des émissions optiques plus larges que les éléments optiques de l'état de la technique.

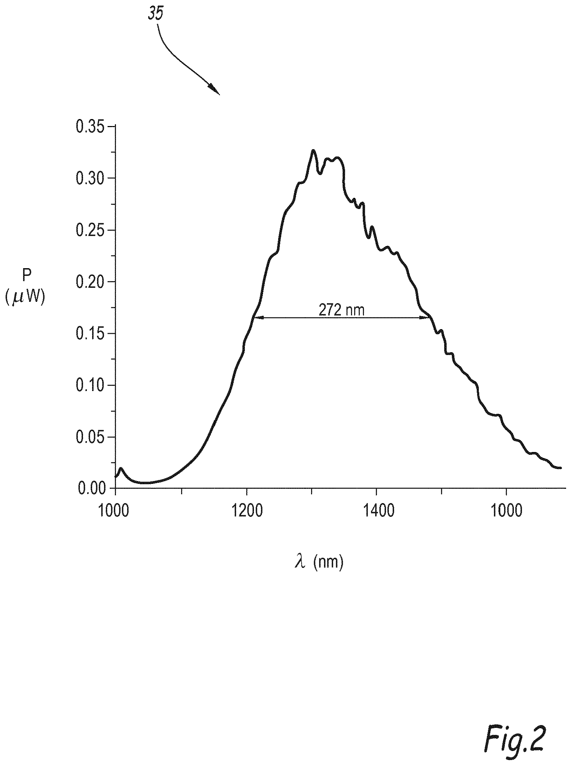

Cela est par exemple visible sur la figure 2 qui présente un spectre d'émission 35 d'un élément optique 10 jouant le rôle de cœur d'une fibre optique 15, c'est-à-dire la puissance P du rayonnement émis en fonction de la longueur d'onde λ du rayonnement émis. La puissance P est exprimée en microwatts (µW) et la longueur d'onde λ en nm.

La largeur à mi-hauteur du spectre d'émission 35 est notamment égale à 272 nm pour une émission centrée autour d'une longueur d'onde λ de 1300 nm.

Une largeur à mi-hauteur (en anglais « full width at half maximum », désigné sous l'acronyme courant FWHM), est une expression de l'amplitude d'une fonction, cette fonction faisant varier une variable dépendante en fonction d'une variable indépendante.

La largeur à mi-hauteur est, par exemple, définie par le Federal Standard 1037C comme étant égale à la différence entre les deux valeurs extrêmes de la variable indépendante pour lesquelles la variable dépendante est égale à la moitié de la valeur maximale de la variable dépendante. En d'autres termes, la largeur à mi-hauteur est la largeur spectrale de la portion de la courbe pour laquelle la fonction présente une amplitude supérieure ou égale à la moitié de l'amplitude maximale.

Dans le cas d'un spectre d'émission, la variable dépendante est la puissance P et la variable indépendante est la longueur d'onde λ du rayonnement émis.

En pratique, une largeur à mi-hauteur est fréquemment estimée à partir d'une approximation gaussienne de la fonction.

Une approximation gaussienne consiste à estimer une fonction gaussienne s'approchant de l'ensemble de valeurs décrit, par exemple par un ajustement de la fonction gaussienne. Dans ce cas, la largeur à mi-hauteur est proche du produit de l'écart-type de la fonction gaussienne estimée et de 2,355.

Lorsque le troisième matériau M3 est Mg_{d}Zn_{1-d}Ga₂O₄, la largeur spectrale de l'émission est particulièrement importante, notamment lorsque le troisième matériau M3 présente un dopage tel qu'un dopage au nickel.

De manière générale, l'émetteur de rayonnement optique comprenant l'élément optique 10 est souvent une source de lumière large bande, c'est-à-dire une source propre à émettre un rayonnement optique présentant une largeur à mi-hauteur supérieure ou égale à 100 nm.

Des sources de lumière large bande sont notamment utilisées pour caractériser des composants et des systèmes optiques, ou pour réaliser des expériences de spectroscopie optique. En particulier, de telles sources de lumières sont particulièrement adaptées pour jouer le rôle de source optique d'un système d'imagerie par tomographie optique cohérente.

Un amplificateur optique est configuré pour amplifier le premier rayonnement.

Dans le cas où l'élément optique 10 est intégré dans un amplificateur optique, l'élément dopant présent dans les particules est, par exemple, configuré pour, lorsque le premier rayonnement est injecté dans l'élément optique 10, l'élément dopant émet un rayonnement optique identique au premier rayonnement, par exemple par effet laser.

Un scintillateur est un dispositif qui émet de la lumière à la suite de l'absorption d'un rayonnement ionisant tel qu'un photon ou une particule chargée.

L'élément optique 10 est également susceptible d'être intégré à un dosimètre de rayons X ou à un thermomètre optique.

Dans un dosimètre, les éléments dopants émettent de la lumière lorsqu'ils sont excités par un rayonnement à détecter tel qu'un rayonnement X. Un rayonnement X est un rayonnement comprenant au moins une onde électromagnétique dont la longueur d'onde est comprise entre 10 picomètres et 10 nm.

Dans un thermomètre, la température est estimée à partir de mesures du temps de vie d'excitation des éléments dopants ainsi que leur longueur d'onde d'émission.

Un dosimètre est un instrument de mesure destiné à mesurer la dose radioactive ou l'équivalent de dose reçus par une personne exposée à un rayonnement ionisant, notamment un rayon X.

Un thermomètre optique est un dispositif configuré pour mesurer une température d'un objet à partir d'une mesure d'un rayonnement optique émis par l'objet, notamment un rayonnement infrarouge.

Par ailleurs, l'élément optique 10 a été décrit ci-dessus comme étant un élément réalisé intégralement dans le premier matériau M1 et formant une partie d'un dispositif, le dispositif étant par exemple une fibre optique, un émetteur de lumière, un dosimètre, un thermomètre, ou encore un dispositif comprenant une fibre optique.

Il est à noter que, par abus de langage, il est possible de considérer que l'élément optique 10 est le dispositif comprenant l'élément réalisé en le premier matériau M1. Dans ce cas, l'élément optique 10 est, par exemple, réalisé partiellement en le premier matériau M1 et partiellement en un autre matériau. En particulier, il est possible de considérer que l'élément optique 10 est une fibre optique comprenant un cœur réalisé en le premier matériau M1 et une gaine 20.

Selon cette approche, une cavité optique comprenant deux miroirs et un bloc interposé entre les deux miroirs, le bloc étant réalisé en le premier matériau M1, est un autre exemple d'élément optique 10.

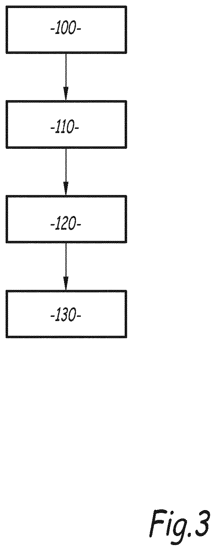

Un exemple de procédé de fabrication de l'élément optique 10 va maintenant être décrit en référence à la figure 3.

Un ordinogramme de l'exemple de procédé de fabrication est représenté sur la figure 3.

Le procédé de fabrication comprend une étape 100 de fourniture, une étape 110 d'insertion, une étape 120 de chauffage et d'étirage et une étape 130 de recuit thermique.

Lors de l'étape de fourniture 100, un matériau précurseur MP est fourni.

Le matériau précurseur MP comprend une poudre. Par exemple, le matériau précurseur MP consiste en ladite poudre.

Cette poudre a une composition analogue à celle du matériau M1, avec néanmoins une valeur de x pour la silice SiO₂ pouvant être plus faible (supérieure ou égale à 50 %) que celle du matériau M1.

Le matériau précurseur comprend donc les mêmes oxydes que ceux cités pour la composition de M1, avec une teneur en silice qui peut être un peu plus faible, les pourcentages molaires des autres oxydes (a, b et c) étant compris dans les mêmes plages que le matériau M1.

En d'autres termes, le matériau précurseur MP est conforme à la formule 1 ci-dessus, x étant notamment compris entre 50 et 80.

De la même manière, GeO₂ et B₂O₃, les additifs rajoutés à la composition de formule 1, sont également inclus dans le matériau précurseur, avec des concentrations respectives et une concentration totale inférieures à 10% massique, de préférence inférieures à 5 % massique.

La poudre comprend notamment les quatre oxydes majeurs du matériau M1 : SiO₂, Na₂O, ZnO et Ga₂O₃.

Une fraction molaire de SiO₂ dans le matériau précurseur MP est comprise entre 50% et 80%. En particulier, la fraction molaire de SiO₂ dans le matériau précurseur MP est comprise entre 65% et 75%.

Par exemple, selon un mode de réalisation, le matériau précurseur MP comporte, voire consiste en, en fraction molaire :
- 50 % à 80 % de SiO₂,
- 2 % à 7 % de Na₂O,
- 5 % à 25 % de ZnO, et
- 5 % à 25 % de Ga₂O₃.

Selon un mode de réalisation particulier, le matériau précurseur MP comporte, voire consiste en, en fraction molaire :
- 65 % de SiO₂,
- 5 % de Na₂O,
- 13 % de ZnO, et
- 17 % de Ga₂O₃.

Selon un mode de réalisation, le matériau précurseur MP est dopé. En d'autres termes, le matériau précurseur MP comprend, en plus de SiO₂, de Na₂O, de ZnO et de Ga₂O₃ (ses oxydes majeurs), un élément dopant.

L'élément dopant est, par exemple, un élément dopant tel que précédemment décrit.

Il est à noter que, comme déjà précisé, la fraction molaire des différents constituants dans les matériaux décrits dans la présente demande sont calculés en l'absence de dopants.

Les fractions molaires de SiO₂, de Na₂O, de ZnO et de Ga₂O₃ dans la poudre sont donc calculées en considérant, au dénominateur, la quantité de matière totale de SiO₂, de Na₂O, de ZnO et de Ga₂O₃.

Ainsi, lorsque le matériau précurseur MP consiste, en fraction molaire, en :
- 50 % à 80% de SiO₂,
- 2% à 7 % de Na₂O,
- 5% à 25 % de ZnO, et
- 5 à 25 % de Ga₂O₃,
il n'est pas exclu que le matériau précurseur MP soit dopé.

La fraction molaire d'élément dopant dans la poudre est, elle, calculée en considérant, au numérateur, la quantité de matière d'élément dopant et, au dénominateur, la quantité de matière totale de SiO₂, de Na₂O, de ZnO, de Ga₂O₃ et de l'élément dopant.

La fraction molaire de l'élément dopant dans le matériau précurseur MP est, par exemple, comprise entre 0,001% et 3 %.

Au cours de l'étape d'insertion 110, la poudre est insérée dans un tube s'étendant selon une direction principale X.

Un tube présentant une symétrie cylindrique dans un plan perpendiculaire à la direction principale X est un exemple de tube.

Le tube est réalisé en SiO₂.

Le tube et la poudre qui est contenue dans le tube forment une préforme.

Lors de l'étape de chauffage 120, la préforme est chauffée à une première température T1. La première température T1 est supérieure ou égale à 1700 degrés Celsius (°C).

Lors de l'étape de chauffage et d'étirage 120, le premier matériau M1 est obtenu à partir de la fusion des différents composants du matériau précurseur MP.

Par exemple, une diffusion chimique des constituants du tube et de la poudre a lieu. En particulier, la fraction molaire de SiO₂ du premier matériau M1 est supérieure ou égale à la fraction molaire de SiO₂ du matériau précurseur MP.

En effet, la silice SiO₂ contenue dans le tube diffuse dans l'élément optique, par exemple dans le cœur de la fibre si l'élément est un cœur de fibre. C'est ce phénomène de diffusion qui permet d'augmenter significativement la quantité de silice et d'obtenir ainsi un premier matériau M1 comprenant plus de silice que le matériau précurseur (poudre). Cela est impossible à obtenir avec les procédés classiques fondés sur l'utilisation de fours.

En particulier, lorsque l'élément optique 10 est un cœur d'une fibre optique 15, la préforme est étirée selon la direction principale X pour former la fibre optique 15 lors de l'étape de chauffage 120.

Le tube forme alors la gaine 20 de la fibre optique 15.

A l'issue de l'étape de chauffage et d'étirage 120, l'élément optique 10 est ensuite placé dans un four de recuit. Lors du transfert de l'élément optique 10 d'un four à l'autre, l'élément optique 10 est refroidi. En particulier, l'élément optique 10 est trempé par contact avec l'air.

Il est à noter que des exemples de procédé de fabrication dans lesquels l'étape de chauffage 120 et l'étape de recuit 130 sont mises en œuvre sans déplacement ou avec un déplacement très faible de l'élément optique 10 sont susceptibles d'être utilisés, notamment si les fours de chauffage et de recuit sont confondus ou très proches l'un de l'autre.

Les étapes 100 à 120 forment un procédé de type « powder-in-tube ».

Lors de l'étape de recuit 130, l'élément optique 10 est chauffé à une deuxième température T2 pendant une durée temporelle ΔT prédéfinie. En pratique, la gaine 20 est également chauffée à la même deuxième température T2 que l'élément optique 10 et pendant la même durée temporelle ΔT.

Selon un mode de réalisation, la durée temporelle ΔT est supérieure ou égale à 1 seconde, notamment supérieure ou égale à 1 minute.

Selon un mode de réalisation, la durée temporelle ΔT est supérieure ou égale à 1 heure (h). Par exemple, la durée temporelle ΔT est supérieure ou égale à 10 h.

La deuxième température T2 est, par exemple, comprise entre 700°C et 1200°C. Une température de cristallisation est définie pour le troisième matériau M3.

La deuxième température T2 est supérieure ou égale à la température de cristallisation.

Toutefois, en pratique, l'écart entre la deuxième température T2 et la température de cristallisation est maîtrisé.

Par exemple, une différence entre la deuxième température T2 et la température de cristallisation est inférieure ou égale à 200°C.

En particulier, la différence entre la deuxième température T2 et la température de cristallisation est inférieure ou égale à 100°C. Selon un mode de mise en œuvre,la différence entre la deuxième température et la température de cristallisation est inférieure ou égale à 75°C.

La deuxième température T2 est, par exemple, comprise entre 750°C et 800°C. Selon un mode de mise en œuvre, la deuxième température T2 est comprise entre 770 °C et 780°C, par exemple égale à 775°C.

En particulier, la deuxième température T2 est comprise entre 750°C et 850°C lorsque la durée temporelle ΔT est supérieure ou égale à 5 h.

Il est à noter que d'autres deuxièmes températures sont susceptibles d'être envisagées.

Après l'étape de recuit 130, l'élément optique 10 est ensuite intégré à un système optique. Par exemple, lorsque l'élément optique 10 est un cœur d'une fibre optique 15, la fibre optique 15 est soudée à une autre fibre optique.

Le procédé de fabrication permet d'obtenir un premier matériau M1 présentant une teneur en SiO₂ supérieure aux procédés de fabrication de l'état de la technique, notamment supérieure ou égale à 65 %.

Le procédé de fabrication permet, en outre, de modifier aisément les caractéristiques de l'élément optique 10 obtenu. En particulier, le nombre et les dimensions des particules 30 sont susceptibles de varier en fonction des paramètres de l'étape de recuit 130.

Une étape de recuit 130 à une deuxième température comprise entre 750°C et 800°C pendant une durée supérieure ou égale à 5 h permet d'obtenir des particules 30 de petite dimension et donc de faibles pertes par diffusion optique.

La fabrication de l'élément optique 10 débouche sur une incorporation de l'élément dopant dans les particules 30. Le taux d'élément dopant dans les particules 30 est donc susceptible d'être très supérieur au taux d'élément dopant dans les fibres optiques réalisées en SiO₂. De manière générale, le premier matériau M1 est susceptible de présenter une fraction molaire de dopants supérieure aux fibres optiques réalisées en SiO₂.

Un élément optique 10 réalisé à partir d'un matériau précurseur MP consistant, en fraction molaire, en :
- 50 % à 80% de SiO₂,
- 2% à 7 % de Na₂O,
- 5% à 25 % de ZnO, et
- 5 à 25 % de Ga₂O₃.
présente des pertes optiques faibles.

Parmi ces éléments optiques 10, un élément optique 10 dont le matériau précurseur MP comporte, en fraction molaire :
- 65% de SiO₂,
- 5 % de Na₂O,
- 13 % de ZnO, et
- 17 % de Ga₂O₃
présente des pertes optiques particulièrement faibles.

Dans certaines applications, il est envisageable que l'élément optique 10 soit fabriqué par le procédé de fabrication détaillé ci-dessus, la gaine 20 étant retirée entre l'étape de chauffage 120 et l'étape de recuit 130, ou postérieurement à l'étape de recuit 130.

Il est également envisageable qu'une gaine 20 soit ajoutée à l'élément optique 10 postérieurement à l'étape de recuit 130, par exemple lorsque la gaine 20 est une gaine en un matériau polymère.

Il est à noter que d'autres compositions du matériau précurseur MP sont susceptibles d'être envisagées.

L'étape de recuit 130 ci-dessus a été décrite en détails dans le cas d'un recuit à basse température pendant plusieurs heures. Cependant, des recuits à une deuxième température T2 plus élevée, notamment comprise entre 975°C et 1025°C, pendant une durée temporelle ΔT inférieure ou égale à 10 minutes, notamment inférieure ou égale à 5 minutes, sont également envisageables.

De tels recuits à température élevée pendant une durée temporelle réduite permettent également d'obtenir des particules P de petites dimensions et donc des pertes par diffusion plus réduites.

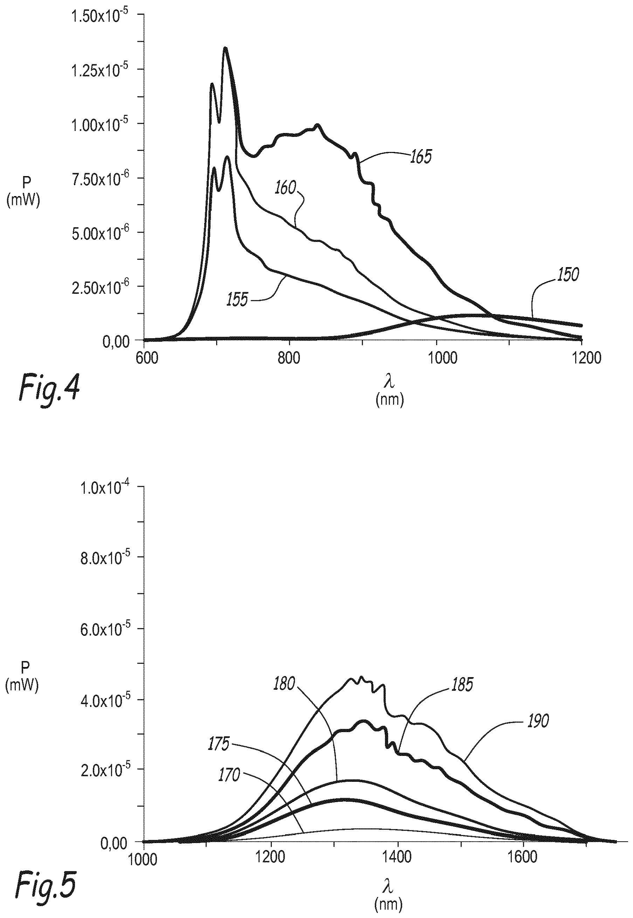

Les effets du recuit sont montrés dans le cas où l'élément optique 10 est un cœur de fibre optique par quatre spectres 150, 155, 160 et 165 sur la figure 4.

En particulier, le premier matériau M1 de chacun des éléments optiques 10 correspondant aux quatre spectres 150 à 165 présente un dopage au chrome Cr³⁺. Le taux de chrome dans le premier matériau M1 est notamment égal à 0,1%.

Le spectre 150 correspond à un élément optique 10 qui n'a pas subi d'étape de recuit 130, le spectre 155 correspond à un élément optique 10 recuit pendant 30 minutes à 900 °C, le spectre 160 correspond à un élément optique 10 recuit pendant 40 minutes à 850 °C et le spectre 165 correspond à un élément optique 10 recuit pendant 40 minutes à 800 °C.

Les effets du recuit sont montrés dans le cas où l'élément optique 10 est un cœur de fibre optique par cinq spectres 170, 175, 180, 185 et 190 sur la figure 5.

En particulier, le premier matériau de chacun de ces éléments optiques 10 correspondant aux cinq spectres 170 à 190 présente un dopage au nickel Ni²⁺. Le taux de nickel dans le premier matériau M1 est notamment égal à 0,5%.

Le spectre 170 correspond à un élément optique 10 recuit 130 pendant 10 minutes à 1000 °C, le spectre 175 correspond à un élément optique 10 recuit pendant 25 minutes à 900 °C, le spectre 180 correspond à un élément optique 10 recuit pendant 4 heures à 850 °C, le spectre 185 correspond à un élément optique 10 recuit pendant 6 heures à 820 °C, et le spectre 190 correspond à un élément optique 10 recuit pendant 7 heures à 800 °C.

## Revendications

1. Elément optique (10) réalisé en un premier matériau (M1), le premier matériau (M1) comprenant une matrice (25) réalisée en un second matériau (M2) et un ensemble de particules (30), réalisées en un troisième matériau (M3), incluses dans la matrice (25), **caractérisé en ce que** le premier matériau (M1) présente une fraction molaire de SiO₂ supérieure ou égale à 75 pourcents, de préférence comprise entre 85 pourcents et 95 pourcents, chaque particule (30) présente une dimension inférieure ou égale à 80 nanomètres, de préférence inférieure ou égale à 10 nanomètres, et **en ce que** le premier matériau (M1) comprend au moins 90%, en masse, par rapport à la masse totale du premier matériau, une composition conforme à la formule suivante :
(SiO₂)ₓ(Ga₂O₃)ₐ(Oxy1)_{b}(Oxy2)_{c} où :
o Oxy1 représente un oxyde choisi parmi ZnO, MgO, NbO_{2.5},WO₃, NiO, SnO, TiO₂, BiO_{1.5}, AgO, CaO, MnO, ou un mélange de ceux-ci, de préférence choisi parmi ZnO, MgO, AgO, BiO_{1.5} ou un mélange de ceux-ci,
o Oxy2 représente un oxyde choisi parmi Na₂O, K₂O ou un mélange de ceux-ci, de préférence Oxy2 représente Na₂O,
o x est supérieur à 75 et inférieur à 99, notamment inférieur à 95,
o a est compris entre 5 et 25,
o b est compris entre 1 et 25,
o c est compris entre 0 et 5, et
o x, a, b, et c sont tels que x + a + b + c = 100.

2. Elément optique selon la revendication 1 dans lequel le troisième matériau (M3) est ELGa₂O₄, où EL désigne un élément choisi parmi Zn, Mg, Nb, W, Ni, Sn, Ti, Bi, Ag, Ca, Mn, ou un mélange de ceux-ci, de préférence EL désigne Mg, Ca et Zn, et encore plus préférentiellement EL désigne Zn.

3. Elément optique selon l'une des revendications précédentes dans lequel le troisième matériau (M3) comprend un élément dopant.

4. Elément optique selon la revendication 3 dans lequel l'élément dopant est un métal de transition, notamment le nickel, ou une terre rare.

5. Elément optique selon l'une des revendications précédentes, dans lequel le second matériau (M2) comprend du SiO₂.

6. Elément optique selon l'une des revendications précédentes, dans lequel le premier matériau est obtenu à partir d'un précurseur comprenant une poudre comprenant du SiO₂, du Na₂O, du ZnO et du Ga₂O₃, la fraction molaire de SiO₂ dans le précurseur étant comprise entre 50 pourcents et 80 pourcents, notamment comprise entre 65 pourcents et 75 pourcents.

7. Elément optique selon l'une des revendications précédentes, dans lequel le premier matériau est obtenu à partir d'un précurseur comprenant une poudre conforme à la formule suivante :
(SiO₂)ₓ(Ga₂O₃)ₐ(Oxy1)_{b}(Oxy2)_{c}
où :
o Oxy1 représente un oxyde choisi parmi ZnO, MgO, NbO_{2.5},WO₃, NiO, SnO, TiO₂, BiO_{1.5}, AgO, CaO, MnO, ou un mélange de ceux-ci, de préférence choisi parmi ZnO, MgO, AgO, BiO_{1.5} ou un mélange de ceux-ci,
o Oxy2 représente un oxyde choisi parmi Na₂O, K₂O ou un mélange de ceux-ci, de préférence Oxy2 représente Na₂O,
o x est strictement supérieur à 50 et inférieur à 80,
o a est compris entre 5 et 25,
o b est compris entre 1 et 25,
o c est compris entre 0 et 5, et
o x, a, b, et c sont tels que x + a + b + c = 100.

8. Elément optique selon l'une des revendications 6 ou 7, dans lequel le précurseur comprend, en plus de la poudre, un élément dopant, au moins une des caractéristiques suivantes étant, de préférence, vérifiée :
- une fraction molaire de l'élément dopant dans le précurseur est comprise entre 0,001 pourcent et 3 pourcents, et
- l'élément dopant est un métal de transition, notamment le nickel, ou une terre rare.

9. Elément optique selon l'une des revendications précédentes, dans lequel le premier matériau est une vitrocéramique.

10. Elément optique selon l'une des revendications précédentes, dans lequel l'une au moins des propriétés suivantes est vérifiée :
- l'élément optique (10) est un cœur pour une fibre optique (15), et
- l'élément optique (10) est configuré pour émettre un rayonnement optique, notamment un rayonnement optique large bande.

11. Elément optique selon l'une des revendications 1 à 9, dans lequel l'élément optique (10) est une fibre optique (15) comprenant un cœur réalisé en le premier matériau et une gaine (20) en SiO₂ entourant le cœur.

12. Procédé de fabrication d'un élément optique (10) selon l'une quelconque des revendications 1 à 11 comprenant des étapes de :
- fourniture (100) d'un précurseur, le précurseur comprenant une poudre comprenant du SiO₂, du Na₂O, du ZnO et du Ga₂O₃, la fraction molaire de SiO₂ étant comprise entre 50 pourcents et 80 pourcents, notamment comprise entre 65 pourcents et 75 pourcents,
- insertion (110) de la poudre dans un tube de silice s'étendant selon une direction principale (X) pour former une préforme,
- chauffage et étirage (120) de la préforme à une température supérieure ou égale à 1700 degrés Celsius pour former l'élément optique (10), et
- recuit (130) de l'élément optique (10).

13. Procédé de fabrication d'un élément optique (10) selon la revendication 12, dans lequel l'étape de recuit (130) comprend le recuit de l'élément optique (10) à une température comprise entre 700 degrés Celsius et 1200 degrés Celsius pendant une durée temporelle comprise entre 1 seconde et 10 heures.

14. Procédé de fabrication d'un élément optique (10) selon la revendication 12 ou 13, dans lequel l'élément optique (10) est une fibre optique (15), l'étape de chauffage (120) comprenant l'étirage de la préforme selon la direction principale (X) pour former une fibre optique (15) comprenant un cœur (10) et une gaine (20) en SiO₂ entourant le cœur (10).

## Patentansprüche

1. Optisches Element (10), das aus einem ersten Material (M1) gefertigt ist, wobei das erste Material (M1) eine Matrix (25), die aus einem zweiten Material (M2) gefertigt ist, und ein Set von Teilchen (30) umfasst, die aus einem dritten Material (M3) gefertigt sind und in der Matrix (25) eingeschlossen sind, **dadurch gekennzeichnet, dass** das erste Material (M1) einen SiO₂-Molenbruch größer oder gleich 75 %, vorzugsweise zwischen 85 % und 95 %, aufweist, jedes Teilchen (30) eine Abmessung kleiner oder gleich 80 nm, vorzugsweise kleiner oder gleich 10 nm aufweist, und dass das erste Material (M1) mindestens 90 Massenprozent, bezogen auf die Gesamtmasse des ersten Materials, einer Zusammensetzung der folgenden Formel umfasst:
(SiO₂)ₓ(Ga₂O₃)ₐ(Oxy1)_{b}(Oxy2)_{c}
worin:
o Oxy1 für ein Oxid steht, das aus ZnO, MgO, NbO_{2,5}, WO₃, NiO, SnO, TiO₂, BiO_{1,5}, AgO, CaO, MnO oder einem Gemisch von diesen ausgewählt ist, vorzugsweise aus ZnO, MgO, AgO, BiO_{1,5} oder einem Gemisch von diesen ausgewählt ist,
o Oxy2 für ein Oxid steht, das aus Na₂O, K₂O oder einem Gemisch von diesen ausgewählt ist, vorzugsweise Oxy2 für Na₂O steht,
o x größer als 75 und kleiner als 99 ist, insbesondere kleiner als 95 ist,
o a zwischen 5 und 25 liegt,
o b zwischen 1 und 25 liegt,
o c zwischen 0 und 5 liegt, und
o x, a, b und c derart sind, dass x + a + b + c = 100.

2. Optisches Element nach Anspruch 1, wobei das dritte Material (M3) ELGa₂O₄ ist, worin EL ein Element bezeichnet, das aus Zn, Mg, Nb, W, Ni, Sn, Ti, Bi, Ag, Ca, Mn oder einem Gemisch von diesen ausgewählt ist, vorzugsweise EL Mg, Ca und Zn bezeichnet, und noch stärker bevorzugt EL Zn bezeichnet.

3. Optisches Element nach einem der vorhergehenden Ansprüche, wobei das dritte Material (M3) ein Dotierungselement umfasst.

4. Optisches Element nach Anspruch 3, wobei das Dotierungselement ein Übergangsmetall, insbesondere Nickel, oder eine seltene Erde ist.

5. Optisches Element nach einem der vorhergehenden Ansprüche, wobei das zweite Material (M2) SiO₂ umfasst.

6. Optisches Element nach einem der vorhergehenden Ansprüche, wobei das erste Material von einem Vorläufer erhalten wird, der ein Pulver umfasst, welches SiO₂, Na₂O, ZnO und Ga₂O₃ umfasst, wobei der SiO₂-Molenbruch in dem Vorläufer zwischen 50 % und 80 %, insbesondere zwischen 65 % und 75 % liegt.

7. Optisches Element nach einem der vorhergehenden Ansprüche, wobei das erste Material von einem Vorläufer erhalten wird, das ein Pulver gemäß der folgenden Formel umfasst:
(SiO₂)ₓ(Ga₂O₃)ₐ(Oxy1)_{b}(Oxy2)_{c},
worin
o Oxy1 für ein Oxid steht, das aus ZnO, MgO, NbO_{2,5}, WO₃, NiO, SnO, TiO₂, BiO_{1,5}, AgO, CaO, MnO oder einem Gemisch von diesen ausgewählt ist, vorzugsweise aus ZnO, MgO, AgO, BiO_{1,5} oder einem Gemisch von diesen ausgewählt ist,
o Oxy2 für ein Oxid steht, das aus Na₂O, K₂O oder einem Gemisch von diesen ausgewählt ist, vorzugsweise Oxy2 für Na₂O steht,
o x strikt größer als 50 und kleiner als 80 ist,
o a zwischen 5 und 25 liegt,
o b zwischen 1 und 25 liegt,
o c zwischen 0 und 5 liegt, und
o x, a, b und c derart sind, dass x + a + b + c = 100.

8. Optisches Element nach einem der Ansprüche 6 oder 7, wobei der Vorläufer neben dem Pulver ein Dotierungselement umfasst, wobei vorzugsweise mindestens eines der folgenden Kennzeichen nachgewiesen ist:
- ein Molenbruch des Dotierungselements in dem Vorläufer liegt zwischen 0,001 % und 3 % und
- das Dotierungselement ist ein Übergangsmetall, insbesondere Nickel, oder eine seltene Erde.

9. Optisches Element nach einem der vorhergehenden Ansprüche, wobei das erste Material eine Glaskeramik ist.

10. Optisches Element nach einem der vorhergehenden Ansprüche, wobei mindestens eine der folgenden Eigenschaften nachgewiesen ist:
- das optische Element (10) ist ein Kern für eine Lichtleitfaser (15) und
- das optische Element (10) ist dafür konfiguriert, eine optische Strahlung auszusenden, insbesondere eine optische Breitbandstrahlung.

11. Optisches Element nach einem der Ansprüche 1 bis 9, wobei das optische Element (10) eine Lichtleitfaser (15) ist, die einen Kern, der aus dem ersten Material gefertigt ist, und eine den Kern umgebende Umhüllung (20) aus SiO₂ umfasst.

12. Herstellungsverfahren für ein optisches Element (10) nach einem der Ansprüche 1 bis 11, umfassend die folgenden Schritte:
- Bereitstellen (100) eines Vorläufers, wobei der Vorläufer ein Pulver umfasst, welches SiO₂, Na₂O, ZnO und Ga₂O₃ umfasst, wobei der SiO₂-Molenbruch zwischen 50 % und 80 %, insbesondere zwischen 65 % und 75 %, liegt,
- Einbringen (110) des Pulvers in ein Siliziumrohr, das sich entlang einer Hauptrichtung (X) erstreckt, um eine Vorform zu bilden,
- Heizen und Strecken (120) der Vorform auf eine Temperatur größer oder gleich 1700 °C, um das optische Element (10) zu bilden, und
- Glühen (130) des optischen Elements (10).

13. Herstellungsverfahren für ein optisches Element (10) nach Anspruch 12, wobei der Schritt des Glühens (130) das Glühen des optischen Elements (10) bei einer Temperatur zwischen 700 °C und 1200 °C während einer Zeitdauer zwischen 1 Sekunde und 10 Stunden umfasst.

14. Herstellungsverfahren für ein optisches Element (10) nach Anspruch 12 oder 13, wobei das optische Element (10) eine Lichtleitfaser (15) ist, wobei der Schritt des Heizens (120) das Strecken der Vorform entlang der Hauptrichtung (X) umfasst, um eine Lichtleitfaser (15) zu bilden, die einen Kern (10) und eine den Kern (10) umgebende Umhüllung (20) aus SiO₂ umfasst.

## Claims

1. An optical element (10) made of a first material (M1), the first material (M1) comprising a matrix (25) made of a second material (M2) and a set of particles (30), which are made of a third material (M3) and are included in the matrix (25), **characterised in that** the first material (M1)has a molar fraction of SiO₂ higher than or equal to 75 percent, preferably between 85 percent and 95 percent, each particle (30) has a dimension smaller than or equal to 80 nanometers, preferably smaller than or equal to 10 nanometers, and **in that** the first material (M1) comprises at least 90% by weight, with respect to the total weight of the first material, of a composition according to the following formula:
(SiO₂)ₓ(Ga₂O₃)ₐ(Oxy1)_{b}(Oxy2)_{c}
where:
o Oxy1 represents an oxide chosen from ZnO, MgO, NbO_{2.5}, WO₃, NiO, SnO, TiO₂, BiO_{1.5}, AgO, CaO, MnO, or a mixture thereof, preferably chosen from ZnO, MgO, AgO, BiO_{1.5} or a mixture thereof,
o Oxy2 represents an oxide chosen from Na₂O, K₂O or a mixture thereof, preferably Oxy2 represents Na₂O,
o x is larger than 75 and smaller than 99, in particular smaller than 95,
o a is between 5 and 25,
o b is between 1 and 25,
o c is between 0 and 5, and
o x, a, b and c are such that x + a + b + c = 100.

2. The optical element according to claim 1, wherein the third material (M3) is ELGa₂O₄, where EL denotes an element chosen from Zn, Mg, Nb, W, Ni, Sn, Ti, Bi, Ag, Ca, Mn, or a mixture thereof, preferably EL denotes Mg, Ca and Zn, and even more preferably EL denotes Zn.

3. The optical element according to one of the preceding claims, wherein the third material (M3) comprises a doping element.

4. The optical element according to claim 3, wherein the doping element is a transition metal, in particular nickel, or a rare earth.

5. The optical element according to one of the preceding claims, wherein the second material (M2) comprises SiO₂.

6. The optical element according to one of the preceding claims, wherein the first material is obtained from a precursor comprising a powder comprising SiO₂, Na₂O, ZnO and Ga₂O₃, the molar fraction of SiO₂ in the precursor being between 50 percent and 80 percent, in particular between 65 percent and 75 percent.

7. The optical element according to one of the preceding claims, wherein the first material is obtained from a precursor comprising a powder according to the following formula:
(SiO₂)ₓ(Ga₂O₃)ₐ(Oxy1)_{b}(Oxy2)_{c}
where:
o Oxy1 represents an oxide chosen from ZnO, MgO, NbO_{2.5}, WO₃, NiO, SnO, TiO₂, BiO_{1.5}, AgO, CaO, MnO, or a mixture thereof, preferably chosen from ZnO, MgO, AgO, BiO_{1.5} or a mixture thereof,
• Oxy2 represents an oxide chosen from Na₂O, K₂O or a mixture thereof, preferably Oxy2 represents Na₂O,
• x is strictly larger than 50 and smaller than 80,
• a is between 5 and 25,
• b is between 1 and 25,
• c is between 0 and 5, and
• x, a, b and c are such that x + a + b + c = 100.

8. The optical element according to one of claim 6 or 7, wherein the precursor comprises, in addition to the powder, a doping element, wherein preferably at least one of the following characteristics is satisfied:
- a molar fraction of the doping element in the precursor is between 0.001 percent and 3 percent, and
- the doping element is a transition metal, in particular nickel, or a rare earth.

9. The optical element according to one of the preceding claims, wherein the first material is a glass-ceramic.

10. The optical element according to one of the preceding claims, wherein at least one of the following properties is satisfied:
- the optical element (10) is a core for an optical fibre (15), and
- the optical element (10) is configured to emit optical radiation, in particular broadband optical radiation.

11. The optical element according to one of claims 1 to 9, wherein the optical element (10) is an optical fibre (15) comprising a core made of the first material and a cladding (20) made of SiO₂ surrounding the core.

12. A method for manufacturing an optical element (10) according to any one of claims 1 to 11, comprising the steps of:
- providing (100) a precursor, the precursor comprising a powder comprising SiO₂, Na₂O, ZnO and Ga₂O₃, the molar fraction of SiO₂ being between 50 percent and 80 percent, in particular between 65 percent and 75 percent,
- inserting (110) the powder into a silica tube extending in a main direction (X) to form a preform,
- heating and stretching (120) the preform at a temperature higher than or equal to 1700 degrees Celsius to form the optical element (10), and
- annealing (130) the optical element (10).

13. The method for manufacturing an optical element (10) according to claim 12, wherein the annealing step (130) comprises the annealing of the optical element (10) at a temperature of between 700 degrees Celsius and 1200 degrees Celsius for a period of time of between 1 second and 10 hours.

14. The method for manufacturing an optical element (10) according to claim 12 or 13, wherein the optical element (10) is an optical fibre (15), the heating step (120) comprising the stretching of the preform in the main direction (X) to form an optical fibre (15) comprising a core (10) and a cladding (20) made of SiO₂ surrounding the core (10).
